# EUROPEAN PATENT APPLICATION

(11) **EP 4 838 437 A1**
(43) Date of publication of application: **11.11.2026**
(21) Application number: 26177473.1
(22) Date of filing: 08.05.2026
(51) Int. Cl.: G06Q 10/0639, G06Q 10/10, G06Q 10/0631, G06Q 50/04

(54) **SEWING MANAGEMENT SYSTEM AND SEWING MANAGEMENT METHOD**

(30) Priority: 09.05.2025 JP 2025078706
(71) Applicant: JUKI Corporation, Tama-shi, Tokyo 206-8551 (JP)
(72) Inventor: Atsumi, Tadashi, Tokyo, 206-8551 (JP)
(74) Representative: Hoeger, Stellrecht & Partner Patentanwälte mbB

(57) **Abstract**

A sewing management system (1) includes a standard capacity calculation unit (21) configured to calculate a standard capacity (Ws) indicating a standard work capacity of a worker (Mb) who works using a sewing machine (2) based on a work capacity of the worker (Mb) in a first period (Ea), a current capacity acquisition unit (22) configured to acquire a current capacity (Wc) indicating a work capacity of the worker (Mb) in a second period (Eb) after the first period (Ea), a determination unit (23) configured to determine whether the worker (Mb) is in a capacity reduction state in which the current capacity (Wc) is less than the standard capacity (Ws), and a difference between the standard capacity (Ws) and the current capacity (Wc) is equal to or larger than a first specified amount (Da), and an output unit (25) configured to cause a notification device to output notification data when it is determined that the worker (Mb) is in the capacity reduction state.

## Description

### TECHNICAL FIELD

The technique disclosed in the present specification relates to a sewing management system and a sewing management method.

### BACKGROUND ART

In the technical field related to the sewing management system, a sewing management system as disclosed in JP2021-117815A is known.

The sewing management system disclosed in JP2021-117815A estimates a sewing skill of an operator based on production management information, and estimates a production capacity of the operator based on physical condition management information.

### SUMMARY OF INVENTION

In a sewing factory, a worker works using a sewing machine. For example, there is a possibility that the worker cannot exhibit a normal work capacity due to poor physical condition. When a state in which a current work capacity of the worker decreases is left as it is, the productivity of the sewing factory may decrease.

An object of the technique disclosed in the present specification is to recognize a current work capacity of a worker.

The present description discloses a sewing management system. The sewing management system includes a standard capacity calculation unit configured to calculate a standard capacity indicating a standard work capacity of a worker who works using a sewing machine based on a work capacity of the worker in a first period, a current capacity acquisition unit configured to acquire a current capacity indicating a work capacity of the worker in a second period after the first period, a determination unit configured to determine whether the worker is in a capacity reduction state in which the current capacity is less than the standard capacity, and a difference between the standard capacity and the current capacity is equal to or larger than a first specified amount, and an output unit configured to cause a notification device to output notification data when it is determined that the worker is in the capacity reduction state.

According to the technique disclosed in the present specification, it is possible to recognize the current work capacity of the worker.

### BRIEF DESCRIPTION OF DRAWINGS

Fig. 1 is a diagram schematically illustrating a sewing management system according to an embodiment;
Fig. 2 is a block diagram illustrating sewing machines, a management device, and an information terminal according to the embodiment;
Fig. 3 is a diagram illustrating a standard capacity calculation method according to the embodiment;
Fig. 4 is a diagram illustrating a current capacity according to the embodiment;
Fig. 5 is a diagram illustrating a relation among a standard production number, a target production number, and a current production number according to the embodiment;
Fig. 6 is a flowchart illustrating a sewing management method according to an embodiment; and
Fig. 7 is a flowchart illustrating the sewing management method according to the embodiment.

### DESCRIPTION OF EMBODIMENTS

Hereinafter, an embodiment according to the present technique will be described with reference to the drawings, but the present technique is not limited to the embodiment. The components of the embodiment to be described below can be appropriately combined. A part of the components may not be used.

### [Sewing Management System]

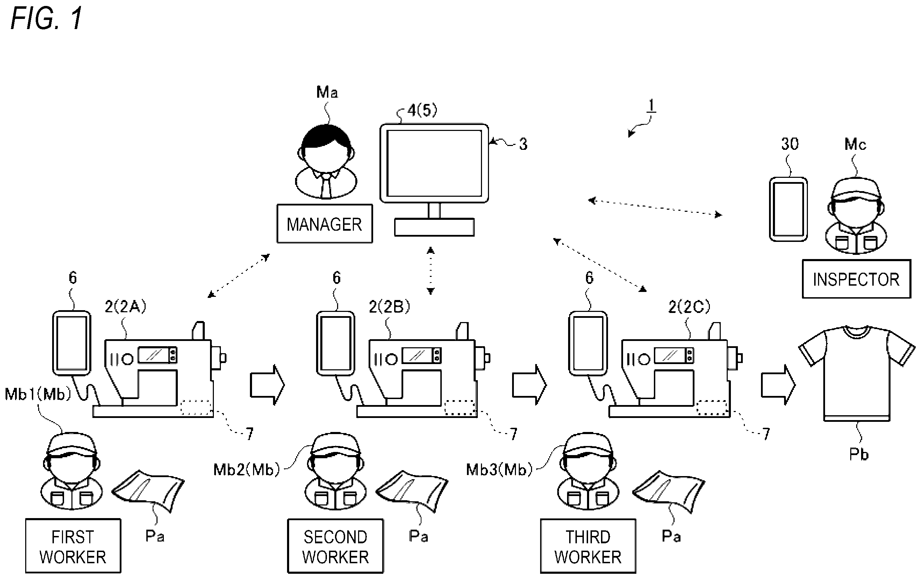

Fig. 1 is a diagram schematically illustrating a sewing management system 1 according to the embodiment. The sewing management system 1 manages a sewing factory that produces a sewn product Pb. Sewing machines 2 are installed in the sewing factory. The sewing machines 2 operate in the sewing factory. The sewing machines 2 are industrial sewing machines. The sewing machine 2 sews a sewing target Pa. The sewing targets Pa are sewn by the sewing machines 2 to produce the sewn product Pb. Examples of the sewing target Pa include fabric. Examples of the sewn product Pb include clothes.

A plurality of sewing machines 2 are installed in the sewing factory. The plurality of sewing machines 2 cooperate to produce the sewn product Pb. A plurality of types of sewing machines 2 according to applications may be installed in the sewing factory. Examples of the type of the sewing machine 2 include a lockstitch sewing machine for sewing a body part, a button sewing machine for attaching a button to the body part, and a pocket sewing machine for attaching a pocket to the body part. To simplify the description, in the embodiment, it is assumed that three sewing machines 2 are installed in the sewing factory. The sewing machines 2 include a first sewing machine 2A, a second sewing machine 2B, and a third sewing machine 2C.

A manager Ma, workers Mb, and an inspector Mc work at the sewing factory. The manager Ma manages the sewing machines 2, the workers Mb, and the inspector Mc. The worker Mb operates the sewing machine 2. The worker Mb works using the sewing machine 2. The worker Mb sews the sewing target Pa using the sewing machine 2.

Each of a plurality of workers Mb works using the sewing machine 2. To simplify the description, in the embodiment, it is assumed that there are three workers Mb working in the sewing factory. The workers Mb include a first worker Mb1, a second worker Mb2, and a third worker Mb3. The first worker Mb1 performs a work of a first sewing process using the first sewing machine 2A. The second worker Mb2 performs a work of a second sewing process using the second sewing machine 2B. The third worker Mb3 performs a work of a third sewing process using the third sewing machine 2C.

The inspector Mc inspects the sewing target Pa after being sewn by the sewing machines 2. The inspection for the sewing target Pa includes an intermediate inspection for inspecting the sewing target Pa for which a part of the sewing processes are completed, and a final inspection for inspecting the sewn product Pb for which all of the sewing processes are ended.

The sewing management system 1 includes a management device 3 that manages at least the sewing machines 2 and the workers Mb. In the embodiment, the management device 3 is installed in the sewing factory. The management device 3 may be installed outside the sewing factory.

The management device 3 includes a display device 4 and an input device 5. The display device 4 displays display data. The display device 4 includes a flat panel display, such as a liquid crystal display or an organic EL display. When the input device 5 is operated by the manager Ma, input data is generated. The input device 5 may be operated by the workers Mb or the inspector Mc. The input device 5 includes a touch panel (touch sensor) disposed on a display screen of the display device 4. The input device 5 may be a computer keyboard, a mouse, or a voice input device.

The sewing machine 2 includes an operation panel 6 and a controller 7. The operation panel 6 includes a display device and an input device. The display device of the operation panel 6 includes a flat panel display, such as a liquid crystal display or an organic EL display. The input device of the operation panel 6 includes at least one of a button, a computer keyboard, a touch panel (touch sensor), and a voice input device. When the input device of the operation panel is operated by the worker Mb, input data is generated.

The inspector Mc carries an information terminal 30. Examples of the information terminal 30 include a personal computer, a tablet terminal, and a smartphone. The information terminal 30 includes a display device and an input device. The display device of the information terminal 30 includes a flat panel display, such as a liquid crystal display or an organic EL display. The input device of the information terminal 30 includes at least one of a touch panel (touch sensor), a computer keyboard, a mouse, and a voice input device. When the input device of the information terminal 30 is operated by the inspector Mc, input data is generated.

The management device 3 is shared by the plurality of sewing machines 2 and the information terminal 30 in the sewing factory. The number of management devices 3 is less than the number of sewing machines 2. The management device 3 can communicate with the sewing machines 2 and the information terminal 30. The management device 3 communicates with the controllers 7 and the information terminal 30.

### [Sewing Machine and Management Device]

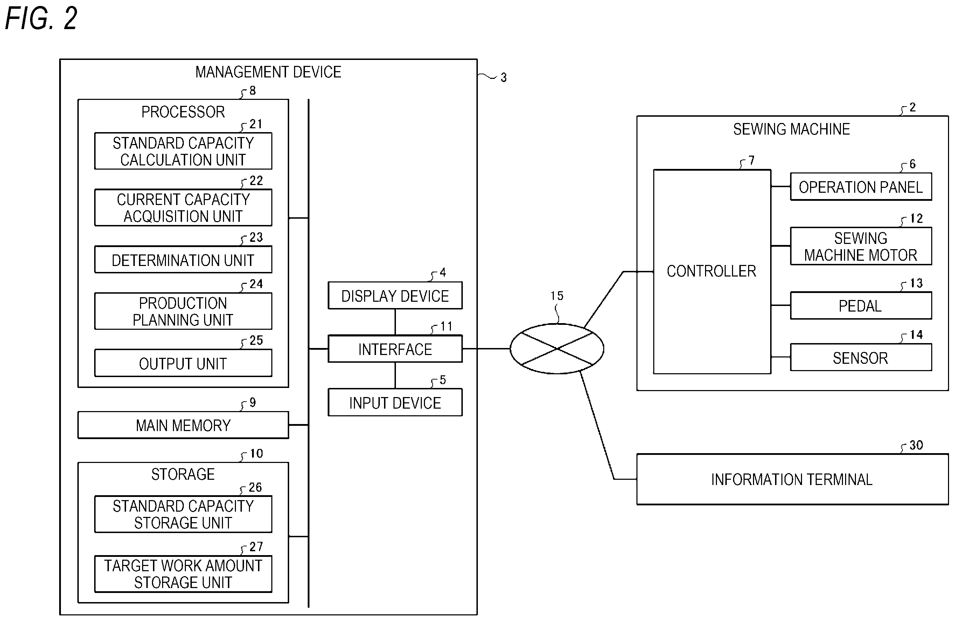

Fig. 2 is a block diagram illustrating the sewing machines 2, the management device 3, and the information terminal 30 according to the embodiment. The management device 3 includes a computer. The management device 3 includes a processor 8 such as a central processing unit (CPU), a main memory 9 including a volatile memory such as a random access memory (RAM), a storage 10 including a nonvolatile memory such as a read only memory (ROM), and an interface 11 including an input and output circuit. A function of the processor 8 is stored in the storage 10 as a computer program. The processor 8 reads the computer program from the storage 10, loads the computer program in the main memory 9, and executes processing according to the computer program. The computer program may be distributed to the management device 3 via a network.

The sewing machine 2 includes the controller 7, the operation panel 6, a sewing machine motor 12, a pedal 13, and a sensor 14. The controller 7 controls the sewing machine 2. The controller 7 includes a computer including a processor, a main memory, a storage, and an interface.

The information terminal 30 includes a computer including a processor, a main memory, a storage, and an interface.

The management device 3, the controller 7, and the information terminal 30 communicate with one another via a network 15. Examples of the network 15 include a local area network (LAN), a wide area network (WAN), an intranet, and the Internet. The management device 3, the controller 7, and the information terminal 30 may perform wireless communication or wired communication.

The sewing machine motor 12 is a main power source of the sewing machine 2. The sewing machine motor 12 is driven to operate a needle bar, a thread take-up lever, and a shuttle of the sewing machine 2. A sewing machine needle reciprocates in an up-down direction while being held by the needle bar. The pedal 13 is operated by feet of the worker Mb. When the pedal 13 is operated, the sewing machine motor 12 is driven. When the operation of the pedal 13 is released, the sewing machine motor 12 is stopped. The sensor 14 detects an operation condition of the sewing machine 2. Examples of the sensor 14 include a rotation sensor that detects rotation data of the sewing machine motor 12. The rotation data of the sewing machine motor 12 includes the number of rotations per unit time or a rotation speed of the sewing machine motor 12.

The processor 8 includes a standard capacity calculation unit 21, a current capacity acquisition unit 22, a determination unit 23, a production planning unit 24, and an output unit 25.

The standard capacity calculation unit 21 calculates a standard capacity Ws indicating a standard work capacity of the worker Mb who works using the sewing machine 2. The standard capacity Ws is a normal work capacity of the worker Mb. The standard capacity Ws is a past standard work capacity of the worker Mb. The standard capacity calculation unit 21 calculates the standard capacity Ws based on a work capacity of the worker Mb in a past first period Ea.

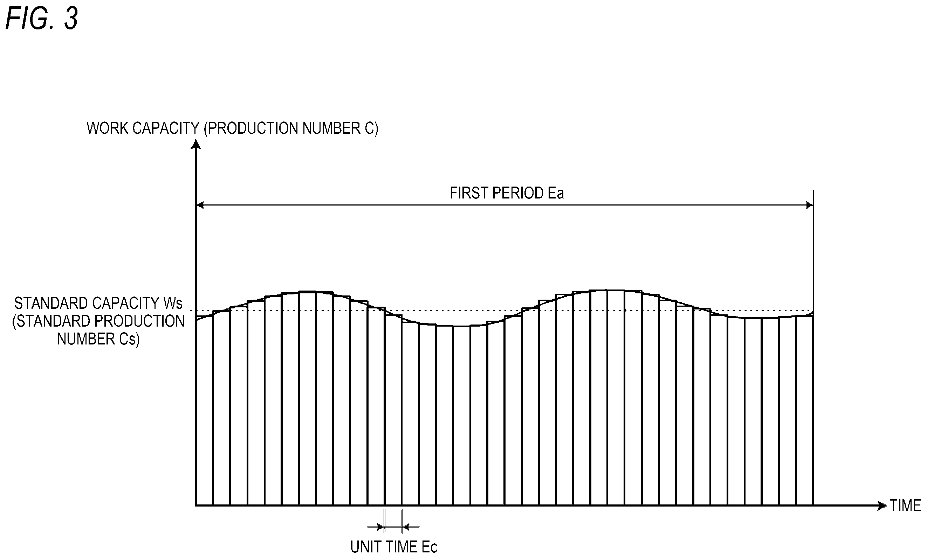

Fig. 3 is a diagram illustrating a method of calculating the standard capacity Ws according to the embodiment. The standard capacity calculation unit 21 acquires the work capacity of the worker Mb in the past first period Ea. The first period Ea is determined arbitrarily. The first period Ea may be one week or one month.

The standard capacity calculation unit 21 acquires a work capacity for each unit time Ec in the first period Ea. The unit time Ec is shorter than the first period Ea. The unit time Ec is determined arbitrarily. The unit time Ec may be 10 minutes, 1 hour, or working hours (for example, 8 hours) of the worker Mb in one day.

The work capacity includes a work amount that the worker Mb can work per unit time Ec. A work amount of the worker Mb with a high work capacity is large. A work amount of the worker Mb with a low work capacity is small.

The work amount may change depending on a difficulty level of the work. When the difficulty level of the work is low, the work amount increases, and when the difficulty level of the work is high, the work amount decreases. When the difficulty level of the work is low, the work amount may increase even for the worker Mb with a low work capacity. When the difficulty level of the work is high, the work amount may decrease even for the worker Mb with a high work capacity. Examples of the work with a low difficulty level include linear sewing. Examples of work with a high difficulty level include curve sewing.

In the embodiment, it is assumed that the work amount of the worker Mb is a production number C indicating the number of sewing targets Pa sewn by the worker Mb using the sewing machine 2. The production number C is the number of sewing targets Pa sewn per unit time Ec. When the difficulty level of the work is the same or similar, the production number C of the worker Mb with a high work capacity is large, and the production number C of the worker Mb with a low work capacity is small.

In the embodiment, the production number C of the worker Mb is counted by the inspector Mc. The inspector Mc counts the production number C of each of the workers Mb (Mb1, Mb2, and Mb3). The inspector Mc counts the production number C of each of the workers Mb (Mb1, Mb2, and Mb3) for each unit time Ec.

The inspector Mc operates the input device of the information terminal 30 to input the production number C of each of the plurality of workers Mb (Mb1, Mb2, and Mb3) to the information terminal 30. The production number C input to the information terminal 30 is transmitted to the management device 3 via the network 15. The standard capacity calculation unit 21 acquires the production number C of each of the plurality of workers Mb (Mb1, Mb2, and Mb3) from the information terminal 30.

The standard capacity calculation unit 21 calculates a standard production number Cs of each of the plurality of workers Mb (Mb1, Mb2, and Mb3) as the standard capacity Ws based on the production number C of each of the plurality of workers Mb (Mb1, Mb2, and Mb3) in the first period Ea acquired from the information terminal 30. The standard production number Cs is an example of a standard work amount.

In the embodiment, the standard production number Cs is an average value of the plurality of production numbers C acquired for each unit time Ec in the first period Ea. The standard capacity calculation unit 21 calculates, as the standard production number Cs of the worker Mb, an average value of the plurality of production numbers C acquired for each unit time Ec in the first period Ea.

When the number of unit times Ec included in the first period Ea is N and the production number C of each of the plurality of unit times Ec is Ck, the standard production number Cs is expressed by the following Equation (1).
[Math. 1] $Cs = \frac{{\sum }_{k = 1}^{N} Ck}{N}$ (1)

The standard capacity calculation unit 21 may exclude outliers from the plurality of production numbers C acquired for each unit time Ec in the first period Ea. The standard capacity calculation unit 21 may calculate, as the standard production number Cs of the worker Mb, an average value of the plurality of production numbers C excluding the outliers. The outlier refers to a value greatly deviating from other values.

The standard production number Cs may be a median value of the plurality of production numbers C acquired for each unit time Ec in the first period Ea. The standard capacity Ws may be a median value of the plurality of production numbers C excluding the outliers.

The standard production number Cs of each of the plurality of workers Mb (Mb1, Mb2, and Mb3) calculated by the standard capacity calculation unit 21 is stored in a standard capacity storage unit 26 of the storage 10.

The current capacity acquisition unit 22 acquires a current capacity Wc indicating a work capacity of the worker Mb in a second period Eb after the first period Ea. The second period Eb is an evaluation period for evaluating the work capacity of the worker Mb. When a work capacity of the worker Mb on today is evaluated, the second period Eb is at least a part period of today. When a work capacity of the worker Mb at a current time is evaluated, the second period Eb is a period including the current time. The second period Eb is shorter than the working hours (for example, 8 hours) of the worker Mb in one day. The second period Eb is determined arbitrarily. The second period Eb may be 10 minutes or 1 hour.

In the embodiment, the current capacity acquisition unit 22 acquires, as the current capacity Wc, a current production number Cc that is the production number C of the worker Mb in the second period Eb. The current production number Cc is an example of a current work amount. The current capacity acquisition unit 22 acquires the current production number Cc of each of the workers Mb (Mb1, Mb2, and Mb3).

In the embodiment, the current production number Cc of the worker Mb is counted by the inspector Mc. The inspector Mc counts the current production number Cc of each of the workers Mb (Mb1, Mb2, and Mb3). The inspector Mc counts the current production number Cc of each of the workers Mb (Mb1, Mb2, and Mb3) for each second period Eb.

The inspector Mc operates the input device of the information terminal 30 to input the current production number Cc of each of the plurality of workers Mb (Mb1, Mb2, and Mb3) to the information terminal 30. The current production number Cc input to the information terminal 30 is transmitted to the management device 3 via the network 15. The current capacity acquisition unit 22 acquires the current production number Cc of each of the workers Mb (Mb1, Mb2, and Mb3) from the information terminal 30.

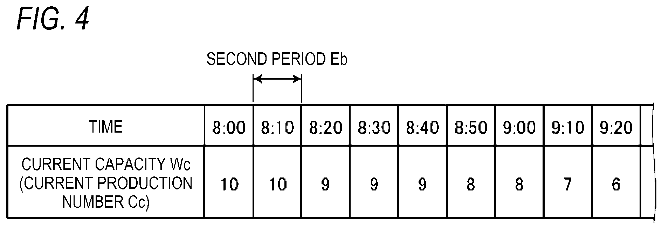

Fig. 4 is a diagram illustrating the current capacity Wc according to the embodiment. Fig. 4 is a diagram illustrating the current production number Cc when the worker Mb starts a work using the sewing machine 2 from 8:00 AM today. In the example illustrated in Fig. 4, the second period Eb is 10 minutes. The current production number Cc in the second period Eb from 8:00 AM to 8: 10 AM is 10 sheets. The current production number Cc in the second period Eb from 8:10 AM to 8:20 AM is 10 sheets. The current production number Cc in each of the second period Eb from 8:20 AM to 8:30 AM, the second period Eb from 8:30 AM to 8:40 AM, and the second period Eb from 8:40 AM to 8:50 AM is 9 sheets. The current production number Cc in each of the second period Eb from 8:50 AM to 9:00 AM and the second period Eb from 9:00 AM to 9:10 AM is 8 sheets. The current production number Cc in the second period Eb from 9:10 AM to 9:20 AM is 7 sheets. The current production number Cc in the second period Eb from 9:20 AM to 9:30 AM is 6 sheets.

The current capacity acquisition unit 22 acquires the current production number Cc as illustrated in Fig. 4 for each of the plurality of workers Mb (Mb1, Mb2, and Mb3).

The determination unit 23 determines whether the worker Mb is in a capacity reduction state in which the current capacity Wc of the worker Mb is less than the standard capacity Ws, and a difference between the standard capacity Ws and the current capacity Wc is equal to or larger than a first specified amount Da. The first specified amount Da is a predetermined value. The determination unit 23 determines whether each of the plurality of workers Mb (Mb1, Mb2, and Mb3) is in the capacity reduction state.

The worker Mb determined to be in the capacity reduction state is, for example, a worker Mb who cannot exhibit a normal work capacity due to poor physical condition. The worker Mb determined not to be in the capacity reduction state is a worker Mb who can exhibit the normal work capacity.

In the embodiment, the determination unit 23 determines whether the worker Mb is in the capacity reduction state in which the current production number Cc of the worker Mb is less than the standard production number Cs, and the difference between the standard production number Cs and the current production number Cc is equal to or larger than the first specified amount Da.

The first specified amount Da may be determined for each of the workers Mb. The first specified amount Da determined for the worker Mb with a high standard capacity Ws may be determined to a small value, and the first specified amount Da determined for the worker Mb with a low standard capacity Ws may be determined to a large value.

The first specified amount Da may be determined for each difficulty level of the work. The first specified amount Da determined for the worker Mb who performs a work with a low difficulty level may be determined to a small value, and the first specified amount Da determined for the worker Mb who performs a work with a high difficulty level may be determined to a large value.

The production planning unit 24 calculates a target work amount to be assigned to each of the plurality of workers Mb (Mb1, Mb2, and Mb3) based on the standard capacity Ws of each of the plurality of workers Mb (Mb1, Mb2, and Mb3). In the embodiment, the production planning unit 24 calculates, as the target work amount, a target production number Cr to be assigned to each of the plurality of workers Mb (Mb1, Mb2, and Mb3). The target production number Cr calculated by the production planning unit 24 is stored in a target work amount storage unit 27 of the storage 10.

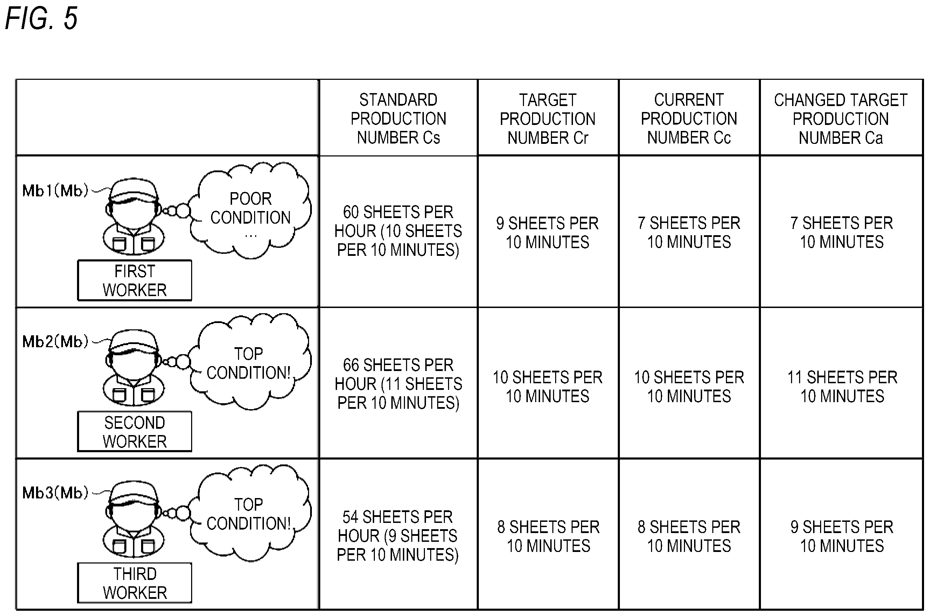

Fig. 5 is a diagram illustrating a relation among the standard production number Cs, the target production number Cr, and the current production number Cc according to the embodiment. In the example illustrated in Fig. 5, the standard production number Cs of the first worker Mb1 is 60 sheets per hour (10 sheets per 10 minutes). The standard production number Cs of the second worker Mb2 is 66 sheets per hour (11 sheets per 10 minutes). The standard production number Cs of the third worker Mb3 is 54 sheets per hour (9 sheets per 10 minutes).

The production planning unit 24 calculates the target production number Cr to be assigned to each of the plurality of workers Mb (Mb1, Mb2, and Mb3) based on the standard production number Cs of each of the plurality of workers Mb (Mb1, Mb2, and Mb3). The production planning unit 24 calculates the target production number Cr such that the target production number Cr does not exceed the standard production number Cs. The production planning unit 24 may calculate the target production number Cr such that the target production number Cr matches the standard production number Cs. The production planning unit 24 may calculate the target production number Cr such that the target production number Cr is less than the standard production number Cs, and the difference between the standard production number Cs and the target production number Cr is less than the first specified amount Da. In the example illustrated in Fig. 5, the target production number Cr of the first worker Mb1 is 9 sheets per 10 minutes. The target production number Cr of the second worker Mb2 is 10 sheets per 10 minutes. The target production number Cr of the third worker Mb3 is 8 sheets per 10 minutes.

The current capacity acquisition unit 22 acquires the current production number Cc of each of the workers Mb (Mb1, Mb2, and Mb3). In the example illustrated in Fig. 5, the current production number Cc of the first worker Mb1 is 7 sheets per 10 minutes. The current production number Cc of the second worker Mb2 is 10 sheets per 10 minutes. The current production number Cc of the third worker Mb3 is 8 sheets per 10 minutes.

The determination unit 23 determines whether the worker Mb is in the capacity reduction state in which the current production number Cc is less than the standard production number Cs, and the difference between the standard production number Cs and the current production number Cc is equal to or larger than the first specified amount Da. In the example illustrated in Fig. 5, when the first specified amount Da is 2, the determination unit 23 determines that the first worker Mb1 is in the capacity reduction state. The determination unit 23 determines that each of the second worker Mb2 and the third worker Mb3 is not in the capacity reduction state.

When it is determined that at least one worker Mb among the plurality of workers Mb (Mb1, Mb2, and Mb3) is in the capacity reduction state, the production planning unit 24 changes the target production number Cr that is the target work amount. The production planning unit 24 changes the target production number Cr such that the target production number Cr of the first worker Mb1 determined to be in the capacity reduction state decreases, and the target production number Cr of at least one of the second worker Mb2 and the third worker Mb3 determined not to be in the capacity reduction state increases.

When there is a worker Mb whose current production number Cc is less than the target production number Cr, the production planning unit 24 changes the target production number Cr such that the target production number Cr of the worker Mb whose current production number Cc is less than the target production number Cr preferentially increases. In the example illustrated in Fig. 5, the current production number Cc of each of the second worker Mb2 and the third worker Mb3 is less than the target production number Cr. The production planning unit 24 changes the target production number Cr to the target production number Ca such that the target production number Cr of each of the second worker Mb2 and the third worker Mb3 whose current production number Cc is less than the target production number Cr preferentially increases. When the target production number Cr is changed to the target production number Ca, the target production number Cr is updated to the target production number Ca in the target work amount storage unit 27.

The production planning unit 24 changes the target production number Cr to the target production number Ca such that the changed target production number Ca does not exceed the standard production number Cs. The production planning unit 24 may change the target production number Cr to the target production number Ca such that the changed target production number Ca exceeds the standard production number Cs, and the difference between the standard production number Cs and the changed target production number Ca does not exceed a predetermined second specified amount Db. The second specified amount Db may be the same value as the first specified amount Da or a value smaller than the first specified amount Da.

When it is determined that the worker Mb is in the capacity reduction state, the output unit 25 causes a notification device to output the notification data. In the embodiment, each of the display device 4, the operation panel 6, and the information terminal 30 is an example of the notification device. Causing the notification device to output the notification data includes causing the display device 4 to display the display data. Causing the notification device to output the notification data includes causing at least one of the display device of the operation panel 6 and the display device of the information terminal 30 to display the display data. When at least one of the display device 4, the operation panel 6, and the information terminal 30 includes a voice output device, causing the notification device to output the notification data includes causing the voice output device to output voice data.

The notification data includes recommendation data for recommending the first worker Mb1 determined to be in the capacity reduction state to take a rest. For example, the output unit 25 causes the display device of the operation panel 6 of the first sewing machine 2A to display display data prompting the first worker Mb1 to take a rest.

The notification data may include decreasing the target production number Cr of the first worker Mb1 determined to be in the capacity reduction state and increasing the target production number Cr of at least one of the second worker Mb2 and the third worker Mb3 determined not to be in the capacity reduction state.

For example, instruction data for instructing to decrease the target production number Cr of the first worker Mb1 and instruction data for instructing to increase the target production number Cr of at least one of the second worker Mb2 and the third worker Mb3 may be displayed on the display device 4.

For example, the changed target production number Ca of the first worker Mb1 may be displayed on the display device of the operation panel 6 of the first sewing machine 2A, the changed target production number Ca of the second worker Mb2 may be displayed on the display device of the operation panel 6 of the second sewing machine 2B, and the changed target production number Ca of the third worker Mb3 may be displayed on the display device of the operation panel 6 of the third sewing machine 2C.

The notification data may include recommendation data for recommending assigning the work of the first worker Mb1 determined to be in the capacity reduction state to at least one of the second worker Mb2 and the third worker Mb3 determined not to be in the capacity reduction state.

### [Sewing Management Method]

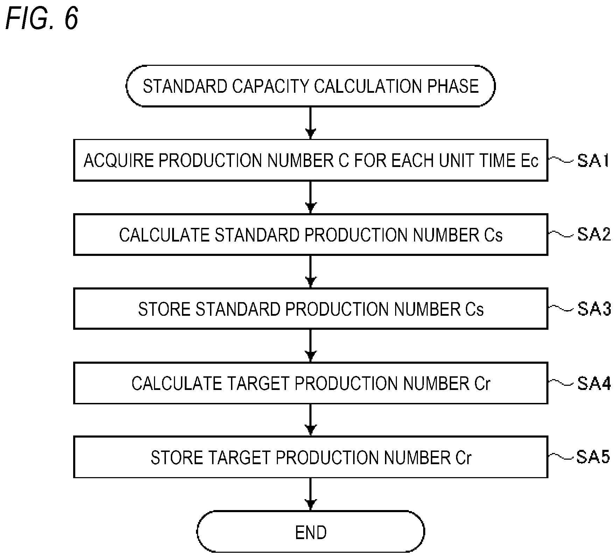

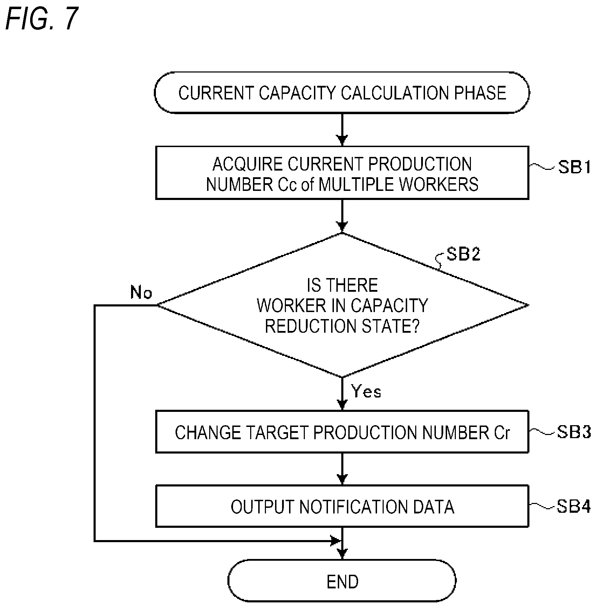

Each of Figs. 6 and 7 is a flowchart illustrating a sewing management method according to an embodiment. Fig. 6 is a flowchart illustrating a standard capacity calculation phase for calculating the standard capacity Ws. Fig. 7 is a flowchart illustrating a current capacity evaluation phase for evaluating the current capacity Wc based on the standard capacity Ws.

The standard capacity calculation phase will be described with reference to Fig. 6. In the first period Ea of the standard capacity calculation phase, the standard capacity calculation unit 21 acquires the work capacity of the worker Mb for each unit time Ec. In the embodiment, the standard capacity calculation unit 21 acquires the production number C of the worker Mb for each unit time Ec. The standard capacity calculation unit 21 acquires the production number C of each of the plurality of workers Mb (Mb1, Mb2, and Mb3) (step SA1).

The standard capacity calculation unit 21 calculates the standard production number Cs as the standard capacity Ws of the worker Mb based on the production number C of the worker Mb in the first period Ea. As shown in Equation (1), the standard production number Cs may be an average value of the plurality of production numbers C acquired for each unit time Ec in the first period Ea (step SA2).

The standard capacity calculation unit 21 calculates the standard production number Cs of each of the plurality of workers Mb (Mb1, Mb2, and Mb3). The standard production number Cs of the worker Mb calculated by the standard capacity calculation unit 21 is stored in the standard capacity storage unit 26 of the storage 10 (step SA3).

The production planning unit 24 calculates the target production number Cr to be assigned to each of the plurality of workers Mb (Mb1, Mb2, and Mb3) based on the standard production number Cs of each of the plurality of workers Mb (Mb1, Mb2, and Mb3) (step SA4).

The target production number Cr calculated by the production planning unit 24 is stored in the target work amount storage unit 27 of the storage 10 (step SA5).

Next, the current capacity evaluation phase will be described with reference to Fig. 7. The current capacity acquisition unit 22 acquires the current capacity Wc indicating the work capacity of the worker Mb in the second period Eb after the first period Ea. In the embodiment, the current capacity acquisition unit 22 acquires the current production number Cc of the worker Mb in the second period Eb. The current capacity acquisition unit 22 acquires the current production number Cc of each of the workers Mb (Mb1, Mb2, and Mb3) (step SB1).

The determination unit 23 determines whether each of the plurality of workers Mb (Mbl, Mb2, and Mb3) is in the capacity reduction state in which the current production number Cc is less than the standard production number Cs, and the difference between the standard production number Cs and the current production number Cc is equal to or larger than the first specified amount Da. That is, the determination unit 23 determines whether there is a worker Mb in the capacity reduction state (step SB2).

In step SB2, when it is determined that there is a worker Mb in the capacity reduction state (step SB2: Yes), the production planning unit 24 changes the target production number Cr of each of the plurality of workers Mb (Mb1, Mb2, and Mb3) (step SB3).

The production planning unit 24 changes the target production number Cr to the target production number Ca such that the target production number Cr of the worker Mb determined to be in the capacity reduction state decreases, and the target production number Cr of the worker Mb determined not to be in the capacity reduction state increases. When there is a worker Mb whose current production number Cc is less than the target production number Cr, the production planning unit 24 changes the target production number Cr to the target production number Ca such that the target production number Cr of the worker Mb whose current production number Cc is less than the target production number Cr preferentially increases. In the target work amount storage unit 27, the target production number Cr is updated to the target production number Ca.

When it is determined that there is a worker Mb in the capacity reduction state, the output unit 25 causes the notification device to output the notification data (step SB4). The notification data includes recommendation data for recommending the worker Mb determined to be in the capacity reduction state to take a rest. For example, the output unit 25 causes the display device of the operation panel 6 of the sewing machine 2 to display the display data prompting the worker Mb in the capacity reduction state to take a rest. The notification data may include recommendation data for recommending decreasing the target production number Cr of the worker Mb determined to be in the capacity reduction state, or recommendation data for recommending assigning the work of the worker Mb determined to be in the capacity reduction state to the worker Mb determined not to be in the capacity reduction state.

When it is determined in step SB2 that there is no worker Mb in the capacity reduction state (step SB2: No), the target production number Cr is not changed. The worker Mb continues the work using the sewing machine 2 based on the target production number Cr.

### [Advantageous Effects]

As described above, according to the embodiment, the processor 8 of the management device 3 includes the standard capacity calculation unit 21 configured to calculate the standard capacity Ws indicating the standard work capacity of the worker Mb who works using the sewing machine 2 based on the work capacity of the worker Mb in the first period Ea, the current capacity acquisition unit 22 configured to acquire the current capacity Wc indicating the work capacity of the worker Mb in the second period Eb after the first period Ea, the determination unit 23 configured to determine whether the worker Mb is in the capacity reduction state in which the current capacity Wc is less than the standard capacity Ws, and the difference between the standard capacity Ws and the current capacity Wc is equal to or larger than the first specified amount Da, and the output unit 25 configured to cause the notification device to output the notification data when it is determined that the worker Mb is in the capacity reduction state.

According to the embodiment, the processor 8 can determine whether there is a worker Mb in the capacity reduction state in which the normal work capacity cannot be exhibited by comparing the standard capacity Ws with the current capacity Wc. When there is a worker Mb in the capacity reduction state in which the normal work capacity cannot be exhibited, the processor 8 causes the notification device to output the notification data. By causing the notification device to output the notification data, at least some of the manager Ma, the workers Mb, and the inspector Mc can recognize the current work capacity of the worker Mb. By recognizing the presence of the worker Mb whose work capacity decreases, measures for preventing a decrease in productivity of the sewing factory are taken. For example, it is possible to recommend the worker Mb whose work capacity decreases to take a rest, decrease the work amount of the worker Mb whose work capacity decreases, or increase the work amount of the worker Mb whose work capacity does not decrease.

By calculating the standard capacity Ws of each of the plurality of workers Mb, the production planning unit 24 can calculate the target work amount to be assigned to each of the plurality of workers Mb based on the standard capacity Ws. When a production plan of the sewn product Pb in the sewing factory is formulated, an appropriate production plan is formulated based on the standard capacity Ws of the worker Mb. For example, a production plan is formulated such that the target work amount assigned to the worker Mb with a high standard capacity Ws increases, and the target work amount assigned to the worker Mb with a low standard capacity Ws decreases. In addition, for example, a production plan is formulated such that a work with high difficulty is assigned to the worker Mb with a high standard capacity Ws, and a work with low difficulty is assigned to the worker Mb with a low standard capacity Ws. For example, in a situation in which the worker Mb with a high standard capacity Ws cannot exhibit the normal work capacity due to poor physical condition, a part or all of the work of the worker Mb who cannot exhibit the normal work capacity is assigned to the other worker Mb, thereby preventing a decrease in productivity of the sewing factory.

### [Other Embodiments]

In the above-described embodiment, the production number C of the worker Mb is counted by the inspector Mc. The production number C of the worker Mb may be counted by the worker Mb. The worker Mb may operate the input device of the operation panel 6 to input the production number C of the worker Mb to the operation panel 6. The production number C input to the operation panel 6 may be transmitted to the management device 3 via the network 15.

In the above-described embodiment, the processor 8 may calculate the work amount of the worker Mb based on detection data of the sensor 14. When the sensor 14 is a rotation sensor that detects rotation data of the sewing machine motor 12, the processor 8 can calculate the work amount of the worker Mb based on the detection data of the sensor 14. As described above, the rotation data of the sewing machine motor 12 includes the number of rotations per unit time or a rotation speed of the sewing machine motor 12. When the sensor 14 detects the rotation of the sewing machine motor 12, the processor 8 can determine that the sewing machine motor 12 is driven. The processor 8 can calculate the number of stitches of the sewing machine 2 based on the rotation data of the sewing machine motor 12 detected by the sensor 14. The number of stitches of the sewing machine 2 refers to the number of times the sewing machine needle held by the needle bar and reciprocating in the up-down direction penetrates the sewing target Pa. The number of stitches of the sewing machine 2 decreases as the number of rotations or the rotation speed of the sewing machine motor 12 decreases, and the number of stitches of the sewing machine 2 increases as the number of rotations or the rotation speed of the sewing machine motor 12 increases. The work amount of the worker Mb decreases as the number of stitches of the sewing machine 2 decreases, and the work amount of the worker Mb increases as the number of stitches of the sewing machine 2 increases. When correlation data indicating a relation among the rotation data of the sewing machine motor 12, the number of stitches of the sewing machine 2, and the work amount of the worker Mb is derived in advance, the processor 8 can calculate the work amount of the worker Mb based on the detection data of the sensor 14 and the correlation data.

The rotation data of the sewing machine motor 12 detected by the sensor 14 correlates with an operation state of the pedal 13 by the worker Mb. The operation state of the pedal 13 includes the number of operations or an operation time. When correlation data indicating a relation among the rotation data of the sewing machine motor 12, the operation state of the pedal 13, and the work amount of the worker Mb is derived in advance, the processor 8 may calculate the work amount of the worker Mb based on the detection data of the sensor 14 and the correlation data.

In the above-described embodiment, when a work situation of the worker Mb is imaged by a camera, the processor 8 may calculate the work amount of the worker Mb based on image data captured by the camera. The processor 8 can determine whether the worker Mb is sewing the sewing target Pa, by subjecting the image data to an image processing.

In the above-described embodiment, the work capacity of the worker Mb is the production number C indicating the work amount of the worker Mb. The work capacity of the worker Mb may be a defective rate F of the sewing targets Pa after the worker Mb performs the sewing using the sewing machine 2. The defective rate F refers to a proportion of defective products to the total number of sewing targets Pa sewn per unit time Ec. The defective rate F of the worker Mb with a high work capacity is low, and the defective rate F of the worker Mb with a low work capacity is high. The defective rate F of each of the plurality of workers Mb may be counted by the inspector Mc or may be counted by the worker Mb. The standard capacity calculation unit 21 calculates a standard defective rate Fs as the standard capacity Ws. The current capacity acquisition unit 22 acquires a current defective rate Fc as the current capacity Wc. The current capacity Wc being less than the standard capacity Ws means that the current defective rate Fc exceeds the standard defective rate Fs. The determination unit 23 determines whether the worker Mb is in the capacity reduction state in which the current defective rate Fc exceeds the standard defective rate Fs, and a difference between the standard defective rate Fs and the current defective rate Fc is equal to or larger than a predetermined third specified amount Dc. When it is determined that at least one worker Mb is in the capacity reduction state, the production planning unit 24 changes the target work amount such that the target work amount of the worker Mb determined to be in the capacity reduction state decreases, and the target work amount of the worker Mb determined not to be in the capacity reduction state increases. When it is determined that the worker Mb is in the capacity reduction state, the output unit 25 causes the notification device to output the notification data.

In the above-described embodiment, the work capacity of the worker Mb is counted by the inspector Mc, and transmitted from the information terminal 30 to the management device 3. The manager Ma may count the work capacity of the worker Mb. The manager Ma may operate the input device 5 to input the work capacity of the worker Mb to the processor 8.

In the above-described embodiment, a standard work time may be used as the standard capacity Ws. The work time refers to a time required for a worker having a standard proficiency level to work under standard work procedures, methods, and conditions. A net time required for the worker Mb to work may be used as the current capacity Wc.

## Claims

1. A sewing management system comprising:
a standard capacity calculation unit configured to calculate a standard capacity indicating a standard work capacity of a worker who works using a sewing machine based on a work capacity of the worker in a first period;
a current capacity acquisition unit configured to acquire a current capacity indicating a work capacity of the worker in a second period after the first period;
a determination unit configured to determine whether the worker is in a capacity reduction state in which the current capacity is less than the standard capacity, and a difference between the standard capacity and the current capacity is equal to or larger than a first specified amount; and
an output unit configured to cause a notification device to output notification data when it is determined that the worker is in the capacity reduction state.

2. The sewing management system according to claim 1, wherein
the notification data includes recommendation data for recommending the worker to take a rest.

3. The sewing management system according to claim 1, wherein
the worker includes a first worker determined to be in the capacity reduction state and a second worker determined not to be in the capacity reduction state, and
the notification data includes recommendation data for recommending decreasing a target work amount of the first worker and increasing a target work amount of the second worker, or assigning a work of the first worker to the second worker.

4. The sewing management system according to claim 1, further comprising:
a production planning unit configured to calculate a target work amount to be assigned to each of a plurality of the workers based on the standard capacity, wherein
the production planning unit changes the target work amount when it is determined that at least one worker is in the capacity reduction state.

5. The sewing management system according to claim 4, wherein
the production planning unit changes the target work amount such that the target work amount of the worker determined to be in the capacity reduction state decreases, and the target work amount of the worker determined not to be in the capacity reduction state increases.

6. The sewing management system according to claim 5, wherein
the current capacity includes a current work amount of the worker, and
the production planning unit changes a target work amount of a worker whose current work amount is less than the target work amount so as to increase the target work amount of the worker.

7. The sewing management system according to claim 1, wherein
the standard capacity calculation unit acquires the work capacity per unit time of the first period, and
the standard capacity is an average value or a median value of a plurality of the work capacities acquired per unit time.

8. The sewing management system according to claim 1, wherein
the work capacity includes at least one of a production number indicating the number of sewing targets sewn by the worker using the sewing machine and a defective rate of the sewing targets after being sewn using the sewing machine.

9. A sewing management method comprising:
calculating a standard capacity indicating a standard work capacity of a worker who works using a sewing machine based on a work capacity of the worker in a first period;
acquiring a current capacity indicating a work capacity of the worker in a second period after the first period;
determining whether the worker is in a capacity reduction state in which the current capacity is less than the standard capacity, and a difference between the standard capacity and the current capacity is equal to or larger than a first specified amount; and
causing a notification device to output notification data when it is determined that the worker is in the capacity reduction state.
